# EUROPEAN PATENT SPECIFICATION

(11) **EP 3 144 164 B1**
(45) Date of publication and mention of the grant of the patent: **20.06.2018**
(21) Application number: 16186813.8
(22) Date of filing: 01.09.2016
(51) Int. Cl.: B60G 3/14, B62K 25/16, B60G 7/02, B60G 17/005, B62K 5/027, B62K 5/08, B62K 5/10, B62K 5/00, B62K 25/04

(54) **SUSPENSION LOCK MECHANISM OF VEHICLE**
AUFHÄNGUNGSSPERRMECHANISMUS FÜR EIN FAHRZEUG
MÉCANISME DE VERROUILLAGE DE SUSPENSION DE VÉHICULE

(30) Priority: 18.09.2015 JP 2015185604
(43) Date of publication of application: 22.03.2017
(73) Proprietor: Honda Motor Co., Ltd., Minato-ku Tokyo 107-8556 (JP)
(72) Inventor: Shimizu, Kenzo, Saitama, 351-0193 (JP); Kawasaki, Yohei, Saitama, 351-0193 (JP)
(74) Representative: Kiwit, Benedikt

(56) References cited:
- EP-A1- 2 913 256
- JP-A- 2004 122 832
- JP-A- 2005 247 303

## Description

The present invention relates to a suspension lock mechanism of a vehicle provided with a suspension in which a shock absorber is extended/contracted by a rocking of an arm.

Heretofore, a telescopic shock absorber is provided to a suspension and a stroke stopping device that stops a stroke of the shock absorber is known (for example, refer to Patent Literature 1).

Patent Literature 1: JP-A No. 2005-247303

In addition to the suspension described in Patent Literature 1, structure for stopping a stroke of a suspension in which a shock absorber is extended/contracted by a rocking according to a vertical motion of a wheel of an arm which is provided to a bottom link type suspension and others is desired.

An object of the present invention is to provide a suspension lock mechanism of a vehicle that can stop a stroke of a suspension.

To settle the above-mentioned problem, the present invention is based upon a suspension lock mechanism of a vehicle where an arm (402) is rockably supported via a spindle (332) by a vehicle body-side member (36b) provided on the vehicle body side, a wheel (2) is supported by an end of the arm (402) via an axle (40) and a stroke of a suspension (401) in which a shock absorber (37b) is extended/contracted by a rocking of the arm (402) is stopped, and has a characteristic that a cylindrical drum (441) is provided to the arm (402) with the drum encircling the spindle (332) and the rocking of the arm (402) can be locked by providing a friction member (442) that stops the turning of the drum (441) by frictional force to the vehicle body-side member (36b).

In the above-mentioned configuration, the friction member may be also a band shoe (442).

Besides, in the above-mentioned configuration, an operating lever (432) is actuated by operating a cable and the drum (441) may be also tightened by the band shoe (442) coupled to the operating lever (432).

Moreover, in the above-mentioned configuration, the operating lever (432) is provided to the vehicle body-side member (36b) that configures a steering mechanism that steers by operating a handlebar and may be also provided with a longitudinal direction of the operating lever (432) along the vehicle body-side member (36b).

In addition, in the above-mentioned configuration, the drum (441) may be also arranged between a pair of side walls (36e, 36f) provided to a lower end of the vehicle body-side member (36b) with the drum apart in a vehicle width direction.

Further, in the above-mentioned configuration, the friction member (442) may be also extended along the vehicle body-side member (36b) from the operating lever (432) to the drum (441).

According to the present invention, as a rocking of the arm can be locked by providing the cylindrical drum to the arm with the drum encircling the spindle and providing the friction member that stops the turning of the drum by frictional force to the vehicle body-side member, a stroke of the suspension can be stopped by stopping the turning of the drum by the frictional force of the friction member and locking the rocking of the arm.

Besides, as the friction member is the band shoe, a cost of the suspension lock mechanism can be reduced with a simple structure that the band shoe is wound onto the drum.

Moreover, as the operating lever is actuated by operating the cable and the drum is tightened by the band shoe coupled to the operating lever, the cost of the suspension lock mechanism can be reduced with a simple structure that the operating lever is actuated by operating the cable and the band shoe is pulled by the operating lever.

In addition, as the operating lever is provided to the vehicle body-side member that configures the steering mechanism that steers by operating the handlebar and is provided with the longitudinal direction of the operating lever along the vehicle body-side member, the operating lever is possibly made inconspicuous in its appearance, the protrusion of the operating lever from the vehicle body-side member is inhibited, and the suspension lock mechanism can be compacted.

Further, as the drum is arranged between the pair of side walls provided to the lower end of the vehicle body-side member with the side walls apart in the vehicle width direction, the protrusion in the vehicle width direction of the suspension lock mechanism is inhibited and the suspension lock mechanism can be compacted. Furthermore, as the suspension lock mechanism is possibly made invisible from the lateral side of the vehicle body, the appearance quality can be enhanced.

Furthermore, as the friction member is extended along the vehicle body-side member from the operating lever to the drum, the suspension lock mechanism can be compactly arranged.

Fig. 1 is a left side view showing a rocking vehicle equivalent to an embodiment of the present invention;
Fig. 2 is a right side view showing the rocking vehicle;
Fig. 3 is a perspective view showing the rocking vehicle viewed from the left front side;
Fig. 4 is a front view showing the rocking vehicle;
Fig. 5 is a left side view showing the front of the rocking vehicle;
Fig. 6 is a front view showing a rocker mechanism and its circumferential parts;
Fig. 7 is a perspective view showing the rocker mechanism and its circumferential parts viewed from the left front side;
Fig. 8 is a rear view showing the rocker mechanism and its circumferential parts;
Fig. 9 is a left side view showing a link type suspension mechanism and a suspension lock mechanism;
Fig. 10 is a left side view showing the section of a principal part of the suspension lock mechanism shown in Fig. 9;
Fig. 11 is a sectional view viewed along a line XI-XI shown in Fig. 9;
Fig. 12 shows the action of the suspension lock mechanism;
Fig. 13 is a rear view showing a rocking lock operating lever, a suspension lock operating lever and their circumferential parts;
Fig. 14 shows the suspension lock operating lever and its circumferential parts;
Fig. 15 is a side view showing the suspension lock operating lever and a key cylinder; and
Fig. 16 shows a state in which the rocking lock operating lever is located in a rocking lock position.

Referring to the drawings, one embodiment of the present invention will be described below. In the description, directions such as longitudinal one, lateral one and vertical one shall be the same as directions in a vehicle unless otherwise specified. Besides, a reference sign FR shown in some drawings denotes the front side of the vehicle, a reference sign UP denotes the upside of the vehicle, and a reference sign LH denotes the left side of the vehicle.

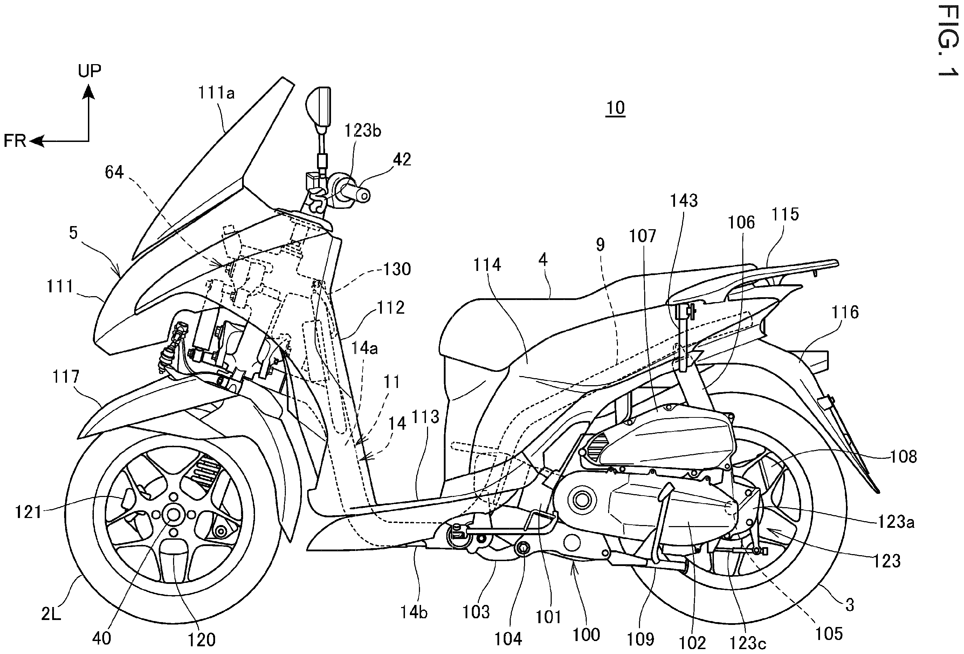

Fig. 1 is a left side view showing a rocking vehicle 10 according to an embodiment of the present invention. In Fig. 1, only the left one of a pair provided laterally is shown.

The rocking vehicle 10 is a three-wheeled vehicle provided with a body frame 11, a pair of front wheels 2L, 2R respectively laterally provided on the downside of the front of the body frame 11, one rear wheel 3 provided in the center in a vehicle width direction in the rear of the rocking vehicle 10 and a power unit 100 that drives the rear wheel 3 which is a driving wheel. Besides, the rocking vehicle 10 is provided with a rocker mechanism 64 that rocks a vehicle body on the front side of the body frame 11.

The rocking vehicle 10 is a saddle-ride type vehicle provided with a seat 4 for an occupant to be seated with the occupant straddling the saddle-ride type vehicle on the rear side. Besides, the rocking vehicle 10 is provided with a body cover 5 that covers the body frame 11.

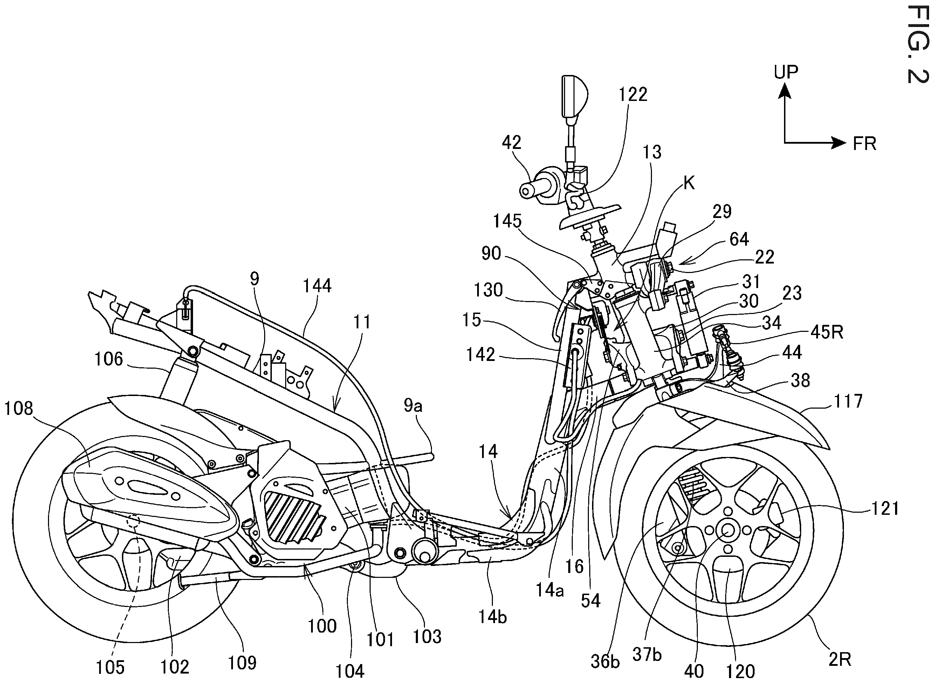

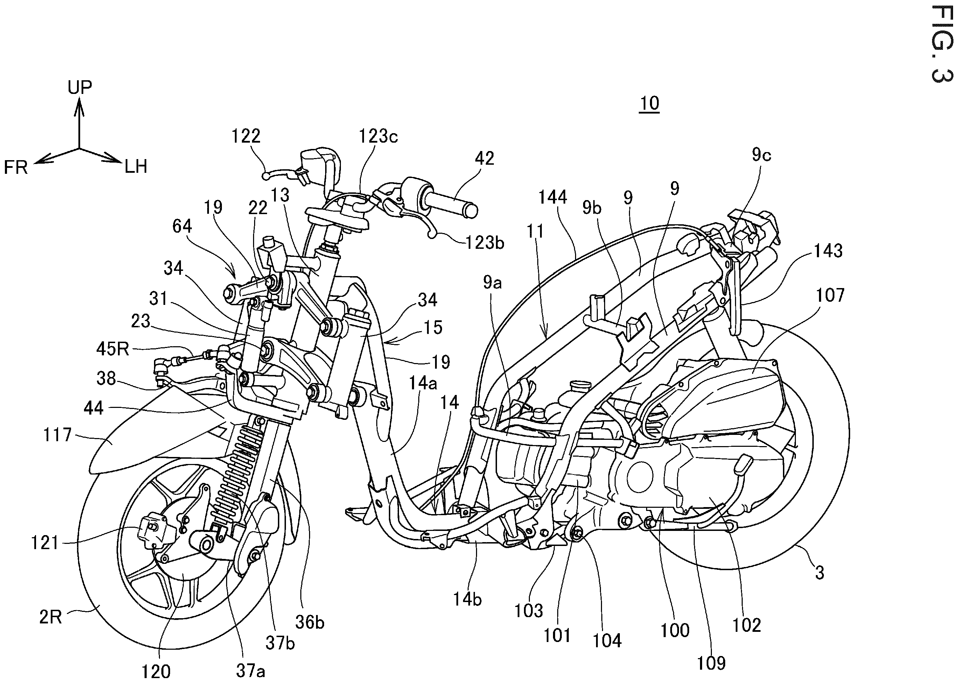

Fig. 2 is a right side view showing the rocking vehicle 10. Fig. 3 is a perspective view showing the rocking vehicle 10 viewed from the left front side. Figs. 2 and 3 show a state in which exterior parts such as the seat 4 (refer to Fig. 1) and the body cover 5 (refer to Fig. 1) are removed. Besides, in Fig. 2, the left front wheel 2L (refer to Fig. 1) and a peripheral structure of the left front wheel 2L are not shown.

As shown in Figs. 1 to 3, the body frame 11 is provided with a head pipe 13 at its front end, a main frame 14 extended downward in a rear direction from the head pipe 13 and a pair of right and left rear frames 9 extended upward in the rear direction from a rear end of the main frame 14.

The main frame 14 is provided with a main frame front 14a extended downward in the rear direction from the head pipe 13 and a main frame rear 14b substantially horizontally extended backward from a lower end of the main frame front 14a. The rear frames 9 are coupled in the vehicle width direction by plural cross members 9a, 9b, 9c.

The power unit 100 is arranged at the back of the main frame 14 and on the downsides of the rear frames 9. The power unit 100 is a unit swing type in which an engine 101 and a transmission case 102 housing a belt type continuously variable transmission mechanism (not shown) are integrated, and is also provided with a function as a swing arm that supports the rear wheel 3.

The power unit 100 is coupled to the rear end of the main frame 14 via a link member 103 coupled to the front of the power unit and can be vertically swung with a pivot 104 provided to the link member 103 in the center.

The transmission case 102 is extended to the left side of the rear wheel 3 on the downside of the left rear frame 9 and the rear wheel 3 is journaled to a rear wheel axle 105 provided to a rear end of the transmission case 102. A rear suspension 106 is laid between the rear end of the transmission case 102 and the rear frame 9. An air cleaner box 107 of the engine 101 is provided on the upside of the transmission case 102. A muffler 108 of the engine 101 is arranged on the right side of the rear wheel 3.

A main stand 109 for parking the rocking vehicle 10 in an upright posture is supported by a lower part of the power unit 100.

The body cover 5 is provided with a front cover 111 that covers the rocker mechanism 64 and the head pipe 13 from the front side and the side, a leg shield 112 that covers the main frame front 14a, a step floor 113 that covers the main frame rear 14b from the upside and a rear cover 114 that covers the rear frames 9 on the downside of the seat 4. A wind screen 111a is provided to the front cover 111.

A grab bar 115 for a pillion passenger seated on the rear of the seat 4 to grasp is provided to rear ends of the rear frames 9. The grab bar 115 is located on the right and left sides of the rear of the seat 4.

The rear wheel 3 is covered by a rear fender 116 from the upside. The front wheels 2L, 2R are covered with a pair of left and right front fenders 117 from each upside.

As shown in Fig. 1, for a braking device of each front wheel 2L, 2R, the rocking vehicle 10 is provided with a brake disc 120 provided to each front wheel 2L, 2R, a brake caliper 121 to which oil pressure is applied via a brake hose and a front wheel brake lever 122 (refer to Fig. 2) to which operation for the brake caliper 121 is input. The front wheel brake lever 122 is provided to an end (an end on the right side) of one of the right and left sides of a handlebar 42 for steering.

Besides, for a rear wheel braking device 123, the rocking vehicle 10 is provided with a drum brake. The rear wheel braking device 123 is provided with a drum 123a provided to the rear wheel 3, a brake lever 123b to which operation for the drum 123a is input and a brake operation cable 123c that connects the brake lever 123b and the drum 123a. The brake lever 123b is provided to an end of the other (an end on the left side) of the right and left sides of the handlebar 42 for steering. When the brake lever 123b is operated, a brake shoe provided inside the drum 123a is pressed on an inner circumference of the drum 123a and the rear wheel 3 is braked.

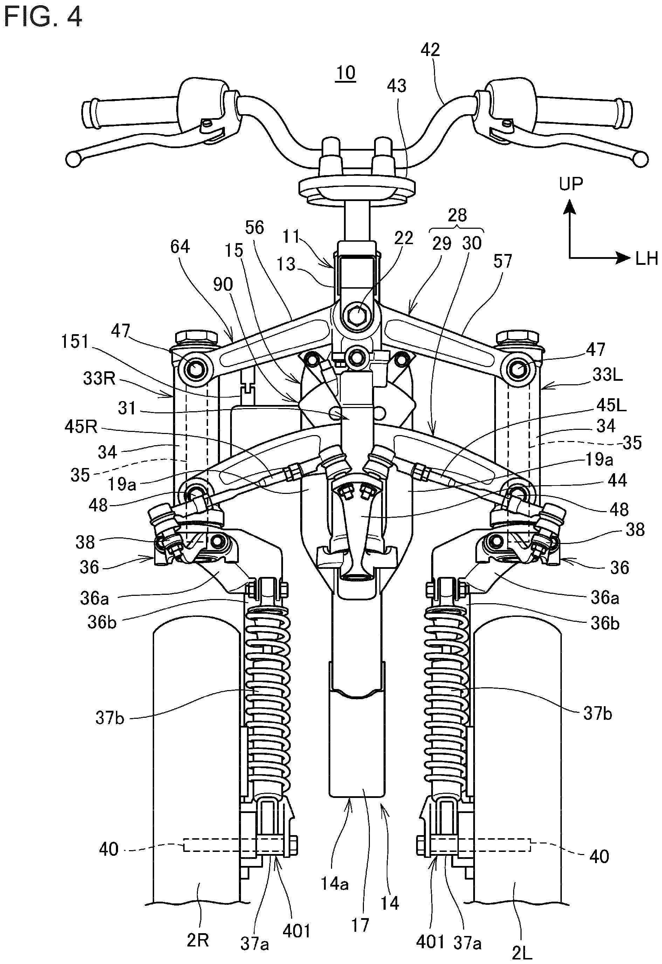

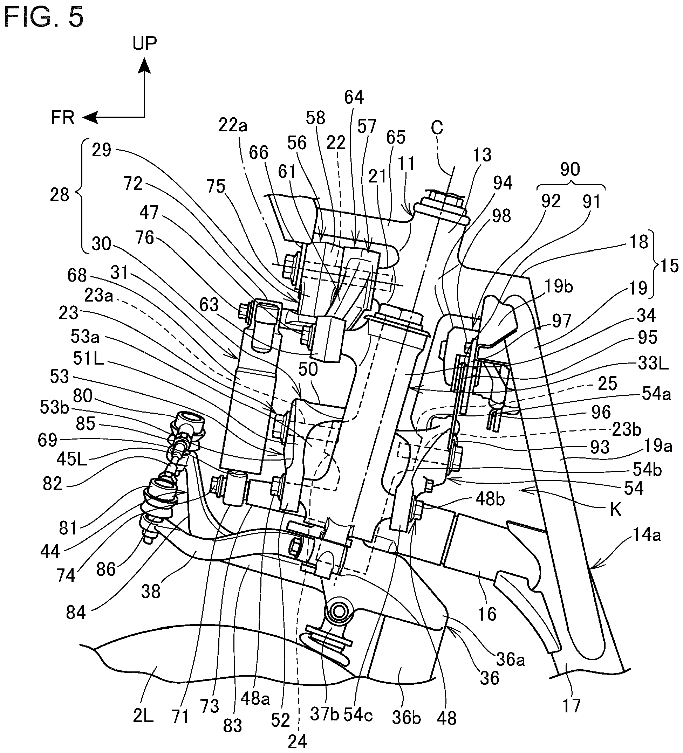

Fig. 4 is a front view showing the rocking vehicle 10 viewed from the front side. Fig. 5 is a left side view showing the front of the rocking vehicle 10.

The cylindrical head pipe 13 is arranged in a state in which its axis C is inclined backward in a side view. The head pipe 13 is located in the center in the vehicle width direction of the rocking vehicle 10.

The main frame front 14a is provided with an upper main frame 15 extended backward and downward from the back of an upper part of the head pipe 13, a lower main frame 16 extended backward and downward from the back of a lower part of the head pipe 13 and a rear main frame 17 extended downward from a rear end of the lower main frame 16. The lower main frame 16 is arranged in a posture substantially perpendicular to the head pipe 13. The rear main frame 17 is extended backward and downward with greater inclination than the lower main frame 16.

The upper main frame 15 is provided with a frame upper end 18 extended backward in substantial parallel with the lower main frame 16 from the head pipe 13 and a pair of right and left forked frames 19 forked laterally from a rear end of the frame upper end 18 and extended downward.

The forked frames 19 are arranged with the rear lower with the substantially same inclination as the lower main frame 16 and are opposite to the back of the head pipe 13. An upper end of each forked frame 19 is connected to the side of the rear end of the frame upper end 18 and a lower end of each forked frame is connected to the side of an upper end of the rear main frame 17. Each forked frame 19 is provided with an intermediate part 19a extended sideways to be outside the head pipe 13 in the vehicle width direction and the intermediate parts 19a are extended mutually in substantial parallel.

That is, space K at the back of the head pipe which is enclosed by the head pipe 13, the upper main frame 15 and the lower main frame 16 is formed between the head pipe 13 and the main frame front 14a in a side view.

A columnar support 21 protruded forward is provided to the front of the upper part of the head pipe 13 and the upper rocker shaft 22 like a bolt (the center of a rocking of an upper arm) is fastened and fixed to the support 21. The upper rocker shaft 22 is arranged in a posture in which the rear is lower in a side view and its end is screwed to the support 21. Detailedly, in the side view, an inclination in which the rear is lower of the axis 22a of the upper rocker shaft 22 is slightly smaller than an inclination of a plane (not shown) perpendicular to the axis C of the head pipe 13. Fig. 4 is the front view showing the front of the rocking vehicle 10 viewed along the axis 22a of the upper rocker shaft 22.

A lower rocker shaft 23 extended forward and backward from the head pipe 13 is provided to the lower part of the head pipe 13. The lower rocker shaft 23 and the upper rocker shaft 22 are arranged in the center in the vehicle width direction. The lower rocker shaft 23 is arranged in parallel with the upper rocker shaft 22 and is extended so that the rear is lower. Detailedly, the lower rocker shaft 23 is provided with a first lower rocker shaft 23a diagonally extended forward and upward from the front of the head pipe 13 and a second lower rocker shaft 23b diagonally extended backward and downward from the back of the head pipe 13. The first lower rocker shaft 23a and the second lower rocker shaft 23b are coaxially arranged.

A columnar front support 24 protruded forward is provided to the front of the lower part of the head pipe 13. The first lower rocker shaft 23a is formed in the shape of a bolt and its end is fastened and fixed to the front support 24 from the front side.

A columnar rear support 25 protruded backward is provided to the back of the lower part of the head pipe 13. The second lower rocker shaft 23b is formed in the shape of a bolt and its end is fastened and fixed to the rear support 25 from the rear side.

A rocker arm 28 laterally rockable is provided in front of the head pipe 13.

The rocker arm 28 is provided with an upper arm 29 laterally rockable with the upper rocker shaft 22 in the center and a lower arm 30 laterally rockable with the lower rocker shaft 23 in the center.

A roll damper (a damper) 31 that inhibits displacement (displacement in a direction of a roll) around the upper rocker shaft 22 and the lower rocker shaft 23 of the rocker arm 28 is provided in front of the rocker arm 28.

The upper arm 29 and the lower arm 30 are laterally (in the vehicle width direction) extended from the center in the vehicle width direction, and a left front wheel supporting member 33L and a right front wheel supporting member 33R that respectively turnably support the left and right front wheels 2L, 2R are respectively supported by respective left and right ends of the upper arm 29 and the lower arm 30.

The left front wheel supporting member 33L and the right front wheel supporting member 33R are provided with side members 34 coupled to the upper arm 29 and the lower arm 30, steering shafts 35 (refer to Fig. 4) journaled inside the side members 34, bottom bridges 36 fixed to respective lower ends of the steering shafts 35 and link type suspension mechanisms 401 coupled to the bottom bridges 36.

The bottom bridge 36 is laterally turnable with the steering shaft 35 as an axis in the center. The bottom bridge 36 is provided with a backward extended part 36a extended inside in the vehicle width direction and backward and a support arm 36b extended downward from the rear of the backward extended part 36a. The tie rod coupling arm 38 extended forward on the upside of each front wheel 2L, 2R is attached to the front of the bottom bridge 36.

The link type suspension mechanism 401 is provided with a pivot arm 402 extended forward from a lower end of the support arm 36b and a cylindrical shock absorber 37b laid between the pivot arm 402 and the backward extended part 36a. The pivot arm 402 is vertically rockably supported with its rear end in the center and each front wheel 2L, 2R is journaled to an axle 40 provided to the front end of the pivot arm 402.

A handlebar shaft (not shown) is journaled in the head pipe 13. A handlebar 42 for the occupant to operate is attached to an upper end of the handlebar shaft via a handlebar post 43.

The handlebar shaft is extended downward through the head pipe 13 and a tie rod support arm 44 integrally rotated with the handlebar shaft is fixed to a lower end of the handlebar shaft. The tie rod support arm 44 is coupled to the tie rod coupling arms 38 via a pair of left and right tie rods 45L, 45R extended in the vehicle width direction.

When the handlebar 42 is steered, the bottom bridge 36 is turned with the steering shaft 35 as an axis in the center via the tie rod support arm 44, the tie rod 45L, 45R and the tie rod coupling arm 38, and hereby, the front wheels 2L, 2R are operated in a direction in which the handlebar 42 is steered.

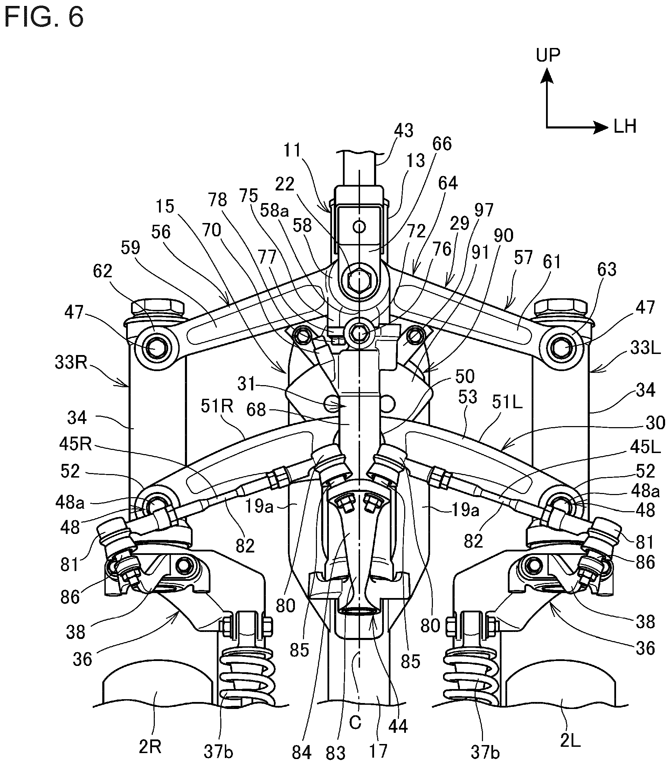

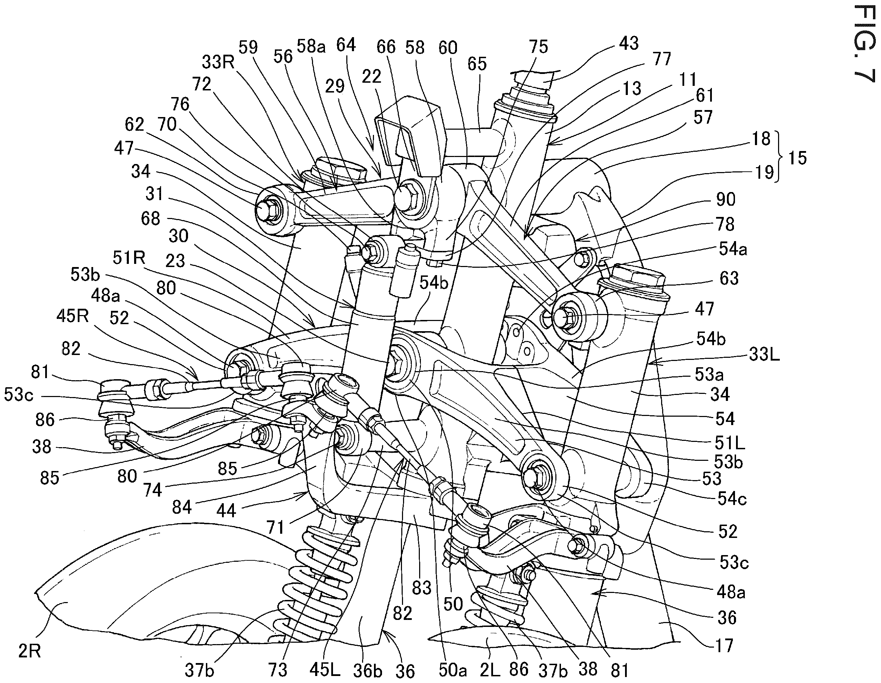

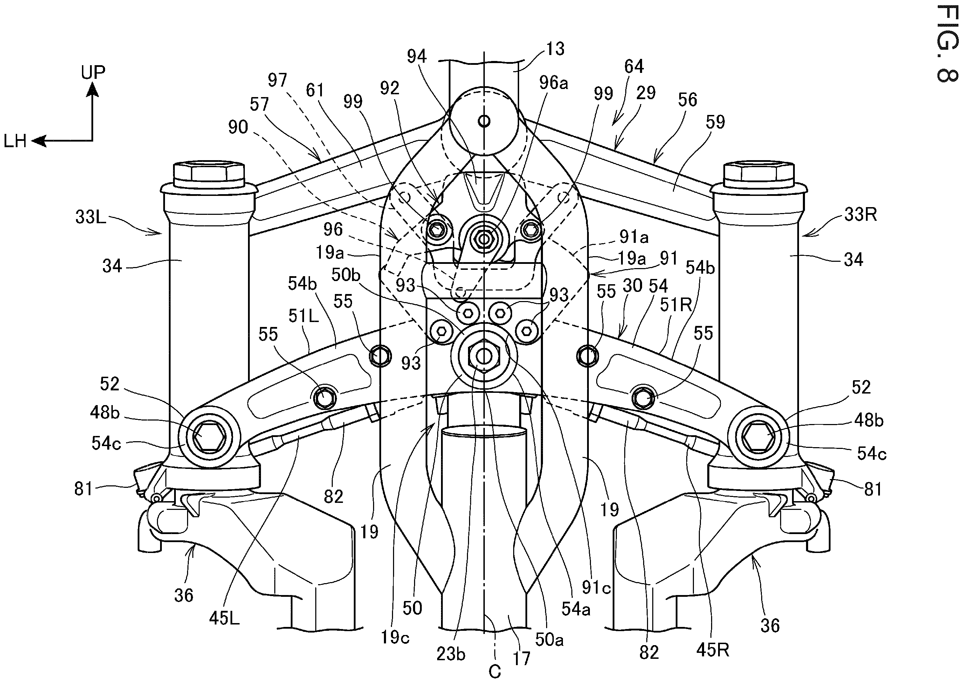

Fig. 6 is a front view showing peripheral parts of the rocker mechanism 64. Detailedly, Fig. 6 is a view viewed from the axial direction of the axis 22a of the upper rocker shaft 22 shown in Fig. 5. Fig. 7 is a perspective view showing the peripheral parts of the rocker mechanism 64 viewed from the left front side. Fig. 8 is a rear view showing the peripheral parts of the rocker mechanism 64.

As shown in Figs. 4 to 8, the side members 34 are located on the right and left sides of the head pipe 13 and are arranged in parallel with the head pipe 13.

Each side member 34 is provided with an upper coupling shaft 47 extended forward from the front of an upper part and a lower coupling shaft 48 extended forward and backward from a front face and a rear face of a lower part. The upper coupling shaft 47 and the lower coupling shaft 48 are arranged in parallel with the upper rocker shaft 22 and the lower rocker shaft 23.

The upper coupling shaft 47 is formed in the shape of a bolt and its end is fastened and fixed to the upper part of the side member 34 from the front side.

Each lower coupling shaft 48 is provided with a first lower coupling shaft 48a provided to the front face of the side member 34 and a second lower coupling shaft 48b provided to the rear face of the side member 34. The first lower coupling shaft 48a is formed in the shape of a bolt and its end is fastened and fixed to the side member 34 from the front side. The second lower coupling shaft 48b is formed in the shape of a bolt and its end is fastened and fixed to the side member 34 from the rear side. The first lower coupling shaft 48a and the second lower coupling shaft 48b are coaxially provided.

The lower arm 30 is integrally provided with a lower rocking central part 50 journaled to the lower rocker shaft 23 and lower arm parts 51L, 51R respectively extended laterally from the lower rocking central part 50 and coupled to the side members 34. The lower arm parts 51L, 51R are laterally symmetrically formed with the lower rocking central part 50 in the center.

The lower rocking central part 50 is cylindrically formed and is journaled to the lower rocker shaft 23 via a bearing fitted to its inner circumference. A lower end 50a (refer to Fig. 7) of a periphery of the lower rocking central part 50 is located in the center in the vehicle width direction.

Each lower arm part 51L, 51R is provided with a cylindrical end 52 outside in the vehicle width direction. Each lower arm part 51L, 51R is journaled to the lower coupling shaft 48 via a bearing fitted to an inner circumference of the end 52.

The lower arm parts 51L, 51R are inclined so that they are located lower farther in the vehicle width direction from the lower rocking central part 50 and the ends 52 are located on the downsides of the lower rocking central part 50. That is, the lower arm is formed in an inverse V type in a front view.

Besides, the lower arm 30 is provided with a front-side lower arm 53 arranged in front of the head pipe 13 and a rear-side lower arm 54 arranged at the back of the head pipe 13. The lower arm 30 is provided with the front-side lower arm 53 and the rear-side lower arm 54 longitudinally holding the head pipe 13. The front-side lower arm 53 and the rear-side lower arm 54 are connected by plural bolts 55 (refer to Fig. 8) inserted into the rear-side lower arm 54 from the rear side.

Detailedly, the front-side lower arm 53 is provided with a front-side rocking central part 53a journaled to the first lower coupling shafts 48a, right and left front-side arm parts 53b extended on front sides of the side members 34 from the front-side rocking central part 53a and front-side ends 53c journaled to the first lower coupling shafts 48a.

The rear-side lower arm 54 is provided with a rear-side rocking central part 54a journaled to the second lower coupling shafts 48b, right and left rear-side arm parts 54b extended on rear sides of the side members 34 from the rear-side rocking central part 54a and rear-side ends 54c journaled to the second lower coupling shafts 48b.

The lower rocking central part 50 is configured by the front-side rocking central part 53a and the rear-side rocking central part 54a. The lower arm parts 51L, 51R are configured by the front-side arm parts 53b and the rear-side arm parts 54b. The ends 52 are configured by the front-side ends 53c and the rear-side ends 54c.

The upper arm 29 is laterally divided and is provided with a right upper arm 56 extended to the right (one-side) side member 34 from the upper rocker shaft 22 and a left upper arm 57 extended to the left (the other-side) side member 34 from the upper rocker shaft 22.

The right upper arm 56 is provided with a first upper rocking central part 58 journaled to the upper rocker shaft 22 and an upper anterior arm part 59 extended rightward from the first upper rocking central part 58 and coupled to the right side member 34.

The left upper arm 57 is provided with a second upper rocking central part 60 journaled to the upper rocker shaft 22 at the back of the first upper rocking central part 58 and an upper posterior arm part 61 extended leftward from the second upper rocking central part 60 and coupled to the left side member 34.

That is, the right upper arm 56 and the left upper arm 57 are longitudinally arranged on the upper rocker shaft 22.

The first upper rocking central part 58 is cylindrically formed and is journaled to the upper rocker shaft 22 via a bearing fitted to its inner circumference. A lower end 58a of a periphery of the first upper rocking central part 58 is located in the center in the vehicle width direction.

The upper anterior arm part 59 is provided with a cylindrical end 62 at an outer end in the vehicle width direction. The upper anterior arm part 59 is journaled to the upper coupling shaft 47 of the right side member 34 via a bearing fitted to an inner circumference of the end 62.

The upper posterior arm part 61 is provided with a cylindrical end 63 at an outer end in the vehicle width direction. The upper posterior arm part 61 is journaled to the upper coupling shaft 47 of the left side member 34 via a bearing fitted to an inner circumference of the end 63.

The right upper arm 56 and the left upper arm 57 are inclined so that they are located lower farther in the vehicle width direction from the upper rocker shaft 22 and the ends 62, 63 are located on the downsides of the first upper rocking central part 58 and the second upper rocking central part 60. The ends 62, 63 are located in the same vertical positions. That is, the upper arm 29 configured by joining the right upper arm 56 and the left upper arm 57 is formed in an inverse V type in a front view.

Besides, the right upper arm 56 is curved so that it is located on the rear side outside in the vehicle width direction, the left upper arm 57 is curved so that it is located on the front side outside in the vehicle width direction, and the ends 62, 63 are located in the same longitudinal positions.

In this embodiment, the rocker mechanism 64 is configured in the vicinity of the head pipe 13 by rockably supporting the lower arm 30 by the head pipe 13 via the lower rocker shaft 23, rockably supporting the right upper arm 56 and the left upper arm 57 by the head pipe 13 via the upper rocker shaft 22 and turnably coupling the side members 34 to the lower arm 30 and the upper arm 29 via the upper coupling shafts 47 and the lower coupling shafts 48.

That is, the rocker mechanism 64 is a multi-joint link mechanism having the head pipe 13, the lower arm 30, the right upper arm 56, the left upper arm 57 and the side members 34 as a node (a link) and having the lower rocker shaft 23, the upper rocker shaft 22, the upper coupling shafts 47 and the lower coupling shafts 48 as a turning shaft (a rocking shaft).

The rocking vehicle 10 is laterally swung by steering operation of the handlebar 42 and the displacement of the center of gravity by the occupant in an inclined state. Detailedly, when the rocking vehicle 10 is inclined, the head pipe 13 is inclined with the lower rocker shaft 23 in the center, the side members 34 are inclined with the upper arm 29 and the lower arm 30 in the center, and the front wheels 2L, 2R closely come in contact with the ground in an inclined state. That is, the front wheels 2L, 2R are swung via the upper arm 29 and the lower arm 30 in accordance with the rocking of the body frame 11. In this state, the upper arm 29 and the lower arm 30 are displaced in an inclined direction in a state in which they are kept substantially horizontal with the ground and the head pipe 13 is inclined at the substantially same angle as the side members 34. That is, in a state in which the rocking vehicle 10 is inclined, the whole except the upper arm 29 and the lower arm 30 is integrally inclined in the front of the rocking vehicle 10.

The head pipe 13 is provided with a forward extended bar 65 extended forward through the upside of the upper arm 29 at its upper end and a plate like stay 66 extended downward toward the front side of the first upper rocking central part 58 of the right upper arm 56 is provided at a front end of the forward extended bar 65.

The upper rocker shaft 22 in the shape of a bolt pierces the stay 66 from the front side, its head abuts on the front of the stay 66, and the first upper rocking central part 58 and the second upper rocking central part 60 are held between the stay 66 and the support 21. That is, the upper rocker shaft 22 is supported by the stay 66 and the support 21 from both sides. Therefore, the supporting rigidity of the upper arm 29 can be enhanced.

The roll damper 31 is a liquid-operated damper formed in the shape of a vertically longer cylinder. The roll damper 31 is provided with a cylindrical cylinder part 68 both ends of which are closed, a piston rod 69 which is inserted into the cylinder part 68 from a lower end of the cylinder part 68 and which houses a piston (not shown) at an upper end inside the cylinder part 68, a spring (not shown) inserted between the bottom side of the piston and the bottom of the cylinder part 68 in a compressed state and an adjustment mechanism 70 that adjusts an extent of damping action of the roll damper 31.

In the cylinder part 68, oil as fluid that damps a motion of the piston is sealed. The cylinder part 68 is axially partitioned into a first fluid chamber and a second fluid chamber by the piston.

The piston is provided with an oil channel through which oil can pass in an axial direction of the piston. The roll damper 31 functions as a damper because the motion of the piston is inhibited by the resistance of oil caused in the oil channel according to the movement of the piston.

The adjustment mechanism 70 is a mechanism that varies the area of the oil channel connecting the first fluid chamber and the second fluid chamber for example so as to vary the resistance of oil.

To reciprocate the roll damper 31 in its extended direction by relatively displacing the cylinder part 68 and the piston rod 69, a load that compresses the spring is required.

The roll damper 31 is provided with a cylindrical lower fulcrum 71 (a lower fulcrum) connected to a lower end of the head pipe 13 and a cylindrical upper fulcrum 72 connected to the upper arm 29.

The lower fulcrum 71 is provided to a lower end of the piston rod 69. The upper fulcrum 72 is provided to an upper end of the cylinder part 68.

The head pipe 13 is provided with a damper stay 73 in the shape of a bar extended forward from a position under the lower rocker shaft 23 at the front. A front end of the damper stay 73 is located in front of a front end of the lower arm 30. A lower damper supporting shaft (a damper supporting part) 74 extended forward in parallel with the lower rocker shaft 23 is provided at the front end of the damper stay 73. The lower damper supporting shaft 74 is formed in the shape of a bolt and its end is fastened and fixed to the front end of the damper stay 73.

The lower fulcrum 71 of the roll damper 31 is journaled to the lower damper supporting shaft 74 via a bearing fitted to the inner circumference.

The right upper arm 56 is provided with an extended part 75 extended downward from the first upper rocking central part 58 and an upper damper supporting shaft 76 that supports the upper fulcrum 72 of the roll damper 31 is attached to the extended part 75.

Detailedly, the upper damper supporting shaft 76 is formed in the shape of a bolt and its end is fastened and fixed to a support stay 77 attached to a bottom of the extended part 75. The support stay 77 is fixed to the bottom of the extended part 75 by a stay fixing bolt 78 inserted into the support stay 77 from the downside. The upper damper supporting shaft 76 is swung integrally with the right upper arm 56.

The upper damper supporting shaft 76 is extended forward in parallel with the lower damper supporting shaft 74 and a front end of the upper damper supporting shaft 76 is located in front of a front end of the right upper arm 56.

The upper fulcrum 72 of the roll damper 31 is journaled to the upper damper supporting shaft 76 via a bearing fitted to the inner circumference.

The roll damper 31 is arranged in front of the lower arm 30, and the upper fulcrum 72 and the lower fulcrum 71 are provided with them vertically having the lower arm 30 between them.

The roll damper 31 is arranged so that an axis of the roll damper 31 is overlapped with the axis C of the head pipe 13 in a front view and the axis is substantially perpendicular to the axis 22a and the first lower rocker shaft 23a in a side view.

When the right upper arm 56 is swung, the roll damper 31 is laterally swung with the lower damper supporting shaft 74 in the center and as the cylinder part 68 is reciprocated via the upper damper supporting shaft 76, the roll damper is axially extended and contracted.

Each tie rod 45L, 45R is provided with an inner end 80 coupled to the tie rod support arm 44, an outer end 81 coupled to the tie rod coupling arm 38 and a body of the rod 82 that connects the inner end 80 and the outer end 81. The body of the rod 82 is linearly extended.

The tie rod support arm 44 is provided with a forward extended part 83 extended forward on the downside of the damper stay 73 from a position at the lower end of the head pipe 13 and an upward extended part 84 which rises upward from a front end of the forward extended part 83 and which is extended in front of a lower end of the roll damper 31.

A pair of right and left inner end coupling parts 85 to which the inner ends 80 of the tie rods 45L, 45R are coupled are provided at an upper end of the upward extended part 84. The inner end coupling parts 85 are arranged symmetrically in a lateral direction on the basis of the axis C of the head pipe 13 and are located outside the lower rocking central part 50. The inner end coupling parts 85 are a shaft protruded upward from the upward extended part 84 and are arranged in a state in which they are inclined so that the side of each upper end is located outside in the vehicle width direction in a front view. Besides, the inner end coupling parts 85 are arranged in a state in which they are inclined so that the side of each upper end is located at the back in a side view.

The inner ends 80 of the tie rods 45L, 45R are turnably coupled to the inner end coupling parts 85 via each ball joint and others.

Front ends of the tie rod coupling arms 38 provided to the bottom bridges 36 are located on the downside and in front of a front end of the upward extended part 84 of the tie rod support arm 44. The outer end coupling parts 86 to which the outer ends 81 of the tie rods 45L, 45R are coupled are provided at the front ends of the tie rod coupling arms 38. The outer end coupling parts 86 are a shaft protruded upward from the front ends of the tie rod coupling arms 38 and are arranged in substantially parallel with the inner end coupling parts 85 in a front view and in a side view. The outer ends 81 of the tie rods 45L, 45R are turnably coupled to the outer end coupling parts 86 via each ball joint and others.

The outer end coupling parts 86 are located outside the inner end coupling parts 85 in the vehicle width direction and are located in front of and on the downsides of the inner end coupling parts 85. Besides, the outer end coupling parts 86 are located on the downsides of and outside the lower coupling shafts 48 of the lower arm 30 in the vehicle width direction in a front view.

Accordingly, each tie rod 45L, 45R that linearly connects the inner end coupling part 85 and the outer end coupling part 86 is arranged with the tie rod diagonally inclined outward and downward in the vehicle width direction in a front view. Detailedly, each tie rod 45L, 45R is located in the lowest position in its outermost part in the vehicle width direction in the front view and is located in a lower position on the front side in a side view.

As shown in Figs. 4 to 8, the rocking vehicle 10 is provided with a rocking lock mechanism 90 that locks a rocking of the rocker mechanism 64.

The rocking lock mechanism 90 is provided with a disc plate 91 fixed to the lower arm 30, a caliper 92 which is fixed to the main frame 14 and which can lock the movement of the disc plate 91, a rocking lock operating lever 130 to which operation for locking a rocking by a user is input and a rocking lock operation cable 131 that connects the side of the rocking lock operating lever 130 and the caliper 92.

The rocking lock mechanism 90 is a mechanism for locking the rocker mechanism 64 of the rocking vehicle 10 in an upright state and prevents the rocking of the rocker mechanism 64 when the rocking vehicle 10 is parked and the user walks, pushing the rocking vehicle 10. The disc plate 91 and the caliper 92 are arranged in the space K at the back of the head pipe in the side view shown in Fig. 5 and are arranged in the center in the vehicle width direction in a front view.

The disc plate 91 is fixed to the rear-side lower arm 54 of the lower arm 30. The rear-side lower arm 54 is arranged in a lower part of the front of the space K at the back of the head pipe in the side view shown in Fig. 5 and is provided along a rear face of the head pipe 13. The lower rocking central part 50 of the rear-side lower arm 54 is provided with a cylindrical protruded part 50b (refer to Fig. 8) protruded backward from the rear faces of the rear-side arm parts 54b.

The disc plate 91 is a plate formed substantially in the shape of a fan. Detailedly, the disc plate 91 is formed substantially in the shape of the fan the central angle of which is substantially 90 degrees. The disc plate 91 is arranged in an upright state so that a fan-shaped periphery 91a is an upper end and is arranged so that its center line in the vehicle width direction is substantially matched with the axis C of the head pipe 13.

The disc plate 91 is provided with a cut-out portion 91c cut out in the shape of a circular arc along a periphery of an upper part of the protruded part 50b of the rear-side lower arm 54 at its lower end.

As shown in Fig. 8, a front face of a lower part of the disc plate 91 abuts a rear face of the rear-side lower arm 54 and the disc plate is arranged in a state in which a lower edge of the cut-out portion 91c is put on the periphery of the protruded part 50b of the rear-side lower arm 54 from the upside. Next, the disc plate 91 is fastened and fixed to an upper part of the center in the lateral direction of the rear-side lower arm 54 by plural disc fixing bolts 93 inserted into the lower part of the disc plate 91 from the rear side. The disc plate 91 is extended upward along the rear face of the rear-side lower arm 54 and the periphery 91a at an upper end is located in an upper part of the space K at the back of the head pipe. The disc plate 91 is opposite to the rear face of the head pipe 13.

The caliper 92 is arranged in the upper part of the space K at the back of the head pipe in the side view shown in Fig. 5. The caliper 92 is provided with a blocky body 94 of the caliper having a groove open downward in a side view, a pair of plate like pads 95 supported in the groove of the body 94 of the caliper and an operating arm 96 for operating the pads 95 by being turned.

The caliper 92 is fixed to the forked frames 19 via plate like caliper stays 97 and is located in the center in the vehicle width direction. The forked frames 19 are provided with stays 19b protruded forward on front faces of upper parts, the caliper stay 97 is fixed to the stay 19b by each bolt 98, and the caliper stay is extended downward in the space K at the back of the head pipe.

The body 94 of the caliper is fastened ad fixed to the caliper stays 97 by caliper fixing bolts 99 (refer to Fig. 8) inserted into right and left ends of the body 94 of the caliper. A turning shaft 96a of the operating arm 96 is located in the center in the vehicle width direction between the caliper fixing bolts 99.

An upper part of the disc plate 91 is arranged in the groove of the caliper 92 and is held between the pair of pads 95. The operating arm 96 of the caliper 92 is connected to the rocking lock operating lever 130 via the rocking lock operation cable (not shown), when the operating arm 96 is operated via the rocking lock operating lever 130 by the user, one of the pads 95 is pressed, the disc plate 91 is held between the pair of pads 95, and a rocking around the lower rocker shaft 23 of the disc plate 91 is disenabled. Hereby, as a rocking of the disc plate 91 is locked and a rocking of the rear-side lower arm 54 to which the disc plate 91 is integrally fixed is locked, the whole rocking of the rocker mechanism 64 is locked.

In this embodiment, as the disc plate 91 and the caliper 92 are arranged in the space K at the back of the head pipe encircled by the head pipe 13, the upper main frame 15 and the lower main frame 16, the rocking lock mechanism 90 can be compactly arranged.

Besides, as the lower arm 30 is provided in a state in which the lower arm is divided in front of and at the back of the head pipe 13 and the disc plate 91 is fixed to the rear-side lower arm 54 in the space K at the back of the head pipe, the rocking lock mechanism 90 can be compactly arranged utilizing the space K at the back of the head pipe. Moreover, as the lower arm 30 is widely provided in a longitudinal direction, the rigidity of the lower arm 30 is enhanced.

Further, as the rear-side lower arm 54 is provided at the back of the head pipe 13, an overhang in front of the head pipe 13 of the whole lower arm 30 can be reduced. Therefore, the roll damper 31 can be compactly arranged in space formed in front of the front-side lower arm 53.

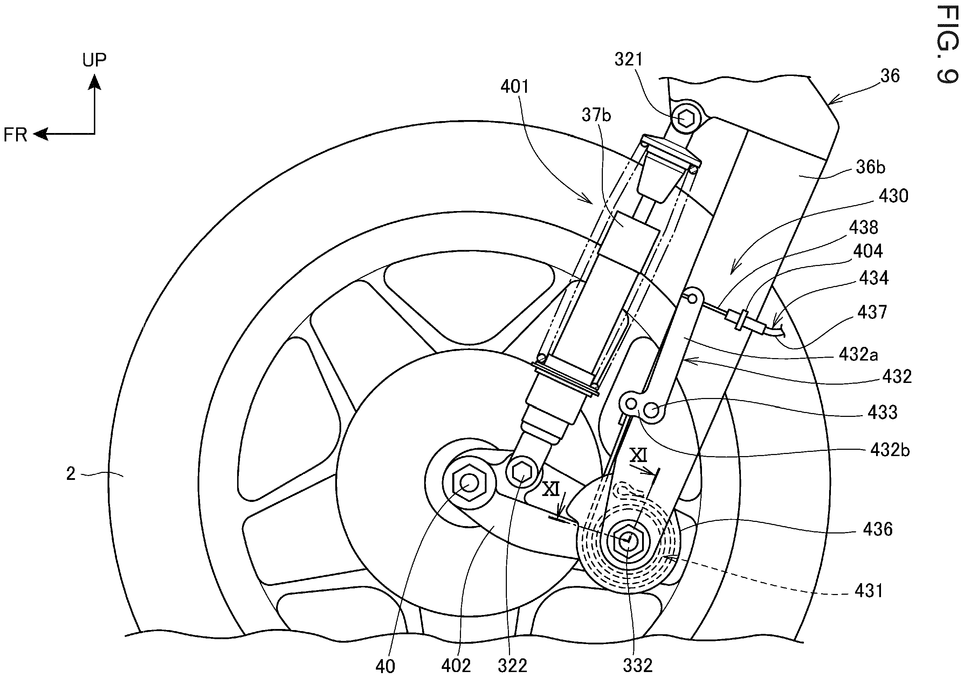

Fig. 9 is a left side view showing the link type suspension mechanism 401 and a suspension lock mechanism 430. The left and right front wheels 2L, 2R shall be described as the front wheel 2 for convenience below.

The link type suspension mechanism 401 is a bottom link type suspension system configured by the pivot arm 402 and the shock absorber 37b.

The rear end of the pivot arm 402 is vertically rockably supported by the lower end of the support arm 36b of the bottom bridge 36 via a spindle 332 and the front wheel 2 is supported by the axle 40 provided to the front end of the pivot arm 402.

The shock absorber 37b is configured by a spring that elastically supports the pivot arm 402 and reduces vibration and shock transmitted from the front wheel 2 and a damper that attenuates the vibration and the shock. An upper end of the shock absorber 37b is rockably attached to the backward extended part 36a of the bottom bridge 36 by a bolt 321 and the lower end of the shock absorber 37b is rockably attached to the middle in a longitudinal direction of the pivot arm 402 by a bolt 322.

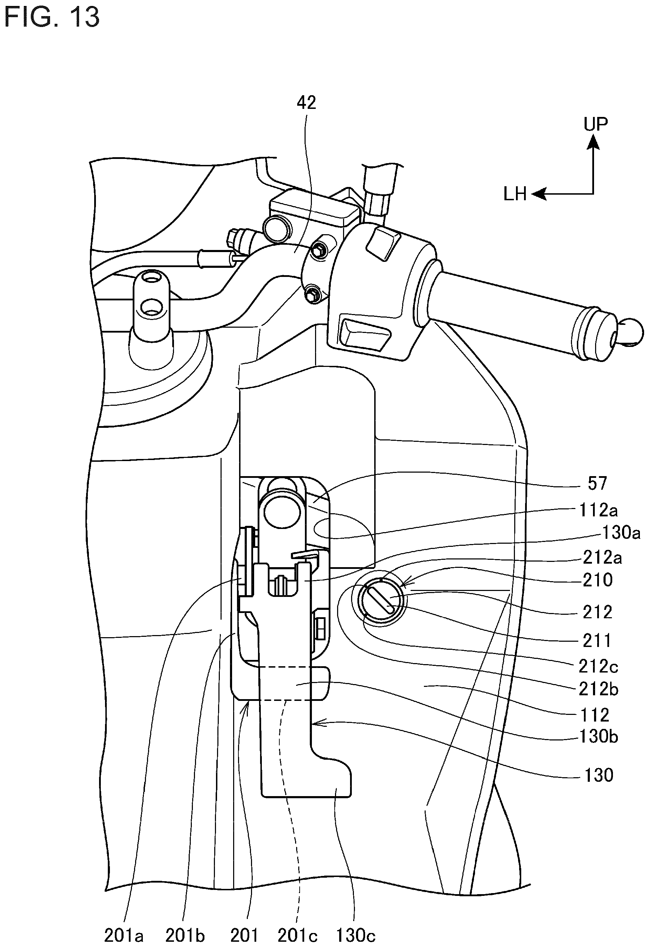

The suspension lock mechanism 430 is provided with a locking part 431, an operating lever 432, a spindle 433, a lock cable 434, a locking part cover 436 and a suspension lock operating lever 201 (see Fig. 13).

The locking part 431 is provided around a spindle 332 of a pivot arm 402 and can lock a rocking of the pivot arm 402. The operating lever 432 is an L-type lever integrally configured by a first lever 432a and a second lever 432b formed to be shorter than the first lever 432a and the locking part 431 is coupled to an end of the second lever 432b. The operating lever 432 is rockably supported by the spindle 433 attached to a support arm 36b.

The lock cable 434 is configured by an outer cable 437 supported by a cable support 404 one end of which is provided to the support arm 36b and inner wire 438 which is movably inserted in the outer cable 437 and the one end side of which is coupled to an end of the first lever 432a of the operating lever 432. The other end of the inner wire 438 is coupled to the suspension lock operating lever 201.

The locking part cover 436 covers most of the locking part 431.

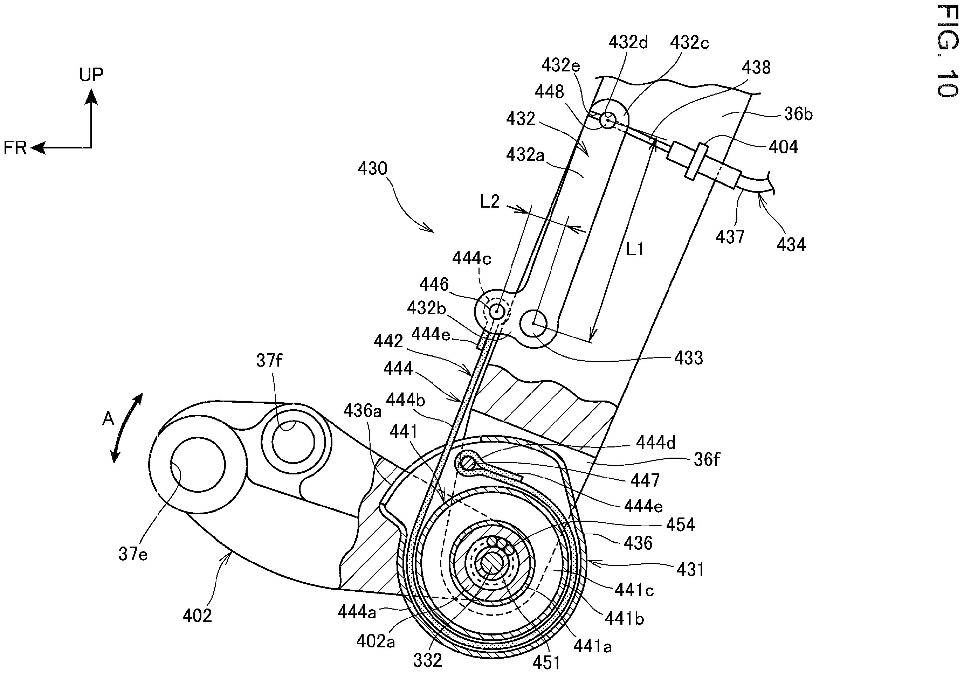

Fig. 10 is a left side view showing the section of a principal part of the suspension lock mechanism 430 shown in Fig. 9.

The suspension lock mechanism 430 is provided with a drum 441 provided integrally with the pivot arm 402 around the spindle 332 and a band shoe 442 that can brake the drum 441 by being wound onto the drum 441.

The drum 441 is provided with an inner cylinder 441a fixed to a cylindrical part 402a formed integrally with an end on the side of the spindle 332 of the pivot arm 402 by fitting and others and an outer cylinder 441b provided around the inner cylinder 441a.

The band shoe 442 is configured by a metallic band 444 and frictional material (not shown) provided to one face of the band 444.

The band 444 is configured by an arc-shaped part 444a formed substantially in the shape of a circular arc in a side view and a linear part 444b which is the other part except the arc-shaped part 444a and which is substantially linearly formed.

The frictional material is provided to an inside face in a radial direction of the arc-shaped part 444a of the band 444.

As for the band 444, one end 444c is coupled to the second lever 432b of the operating lever 432 via the coupling pin 446, the other end 444d is coupled to a fixing pin 447 fixed to the support arm 36b, and the ends are arranged with them encircling the outer cylinder 441b of the drum 441.

The one end 444c and the other end 444d of the band 444 are wound onto the coupling pin 446 and the fixing pin 447 and respective tips 444e of the one end 444c and the other end 444d are welded to each part in the vicinity of the coupling pin 446 and the fixing pin 447 in the band 444 in a piled state.

As for the band 444, the side of the one end 444c is wound from the front side of the drum 441 and the side of the other end 444d is wound from the rear side of the drum 441.

The first lever 432a of the operating lever 432 is extended in a longitudinal direction of the support arm 36b and the second lever 432b is extended in a direction substantially perpendicular to the longitudinal direction of the support arm 36b. Besides, at least an end of the first lever 432a is configured by two plates 432c arranged in a direction of the top side and the back side of page space. A through hole 432d is made in each plate 432c and a slit 432e communicating with the through hole 432d is formed in the plate 432c on this side.

A cylindrical wire end member 448 is provided to an end of the inner wire 438 of the lock cable 434, the inner wire 438 in the vicinity of the wire end member 448 is passed in the slit 432e of the first lever 432a, the wire end member 448 is inserted into each through hole 432d of the two plates 432c of the first lever 432a, and the inner wire 438 is connected to the first lever 432a.

When distance between fulcrums (distance between the spindle 433 and the wire end member 448) of the first lever 432a of the operating lever 432 is set as L1 and distance between fulcrums (distance between the spindle 433 and the coupling pin 446) of the second lever 432b is set as L2, they are set so that L1 > L2. Hereby, force by which the inner wire 438 pulls the first lever 432a can be made less than force by which the second lever 432b pulls the band shoe 442. Hereby, operating force for pulling the inner wire 438 of the suspension lock operating lever 201 (see Fig. 13) can be reduced.

The locking part cover 436 is fixed to the pivot arm 402 and covers the drum 441 and a part encircling the drum 441 of the band shoe 442. In the locking part cover 436, a cover opening 436a which the band shoe 442 pierces and an arc-shaped slit (not shown) for avoiding interference with the fixing pin 447 when the locking part cover 436 is swung integrally with the pivot arm 402 are formed.

A reference sign 37e denotes an axle insertion hole made in the pivot arm 402 for passing the axle 40 (see Fig. 9) and 37f denotes a shock absorber coupling hole made in the pivot arm 402 for coupling a lower end of the shock absorber 37b (see Fig. 9).

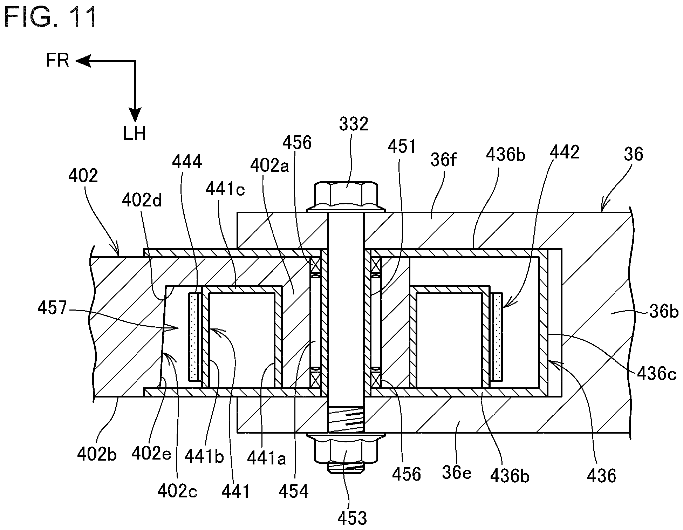

Fig. 11 is a sectional view viewed along a line XI-XI shown in Fig. 9.

A pair of lower end plates 36e, 36f arranged with them apart in the vehicle width direction are integrated with the lower end of the support arm 36b of the bottom bridge 36. A collar 451 is laid between the lower end plates 36e, 36f, the spindle 332 like a bolt pierces the lower end plates 36e, 36f and the collar 451, a nut 453 is screwed to an end of the spindle 332, and the spindle 332 is fixed to the lower end plates 36e, 36f.

The cylindrical part 402a of the pivot arm 402 is fitted to the collar 451 via a needle bearing 454. Hereby, the pivot arm 402 is rockably supported by the support arm 36b via the spindle 332 and the collar 451. Sealing members 456 are provided on both sides of the needle bearing 454 between the cylindrical part 402a of the pivot arm 402 and the collar 451, and the needle bearing 454 is protected by the sealing members 456.

An outside recess 402c substantially in the shape of a circular arc in a side view of the vehicle body is formed outside the cylindrical part 402a in a radial direction at an inside side 402b in the vehicle width direction of the pivot arm 402, and a part of the drum 441 is arranged in the outside recess 402c.

The drum 441 is integrally provided with a doughnut-type and platelike disc part 441c that connects the inner cylinder 441a and the outer cylinder 441b. The disc part 441c is arranged so that it abuts on or is located close to an inner face 402d of the outside recess 402c of the pivot arm 402.

Clearance 457 is provided between the outer cylinder 441b of the drum 441 and an inner circumferential surface 402e of the outside recess 402c and the band shoe 442 is passed in the clearance 457.

The locking part cover 436 covers the outside recess 402c from the lateral side of the vehicle body so as to prevent rainwater, dust and others from invading into the outside recess 402c possibly. The locking part cover 436 is configured by a pair of side walls 436b arranged opposite in the vehicle width direction and a circumferential wall 436c integrally connecting a circumferential edge of the pair of side walls 436b and the cover opening 436a (see Fig. 10) is made in the circumferential wall 436c.

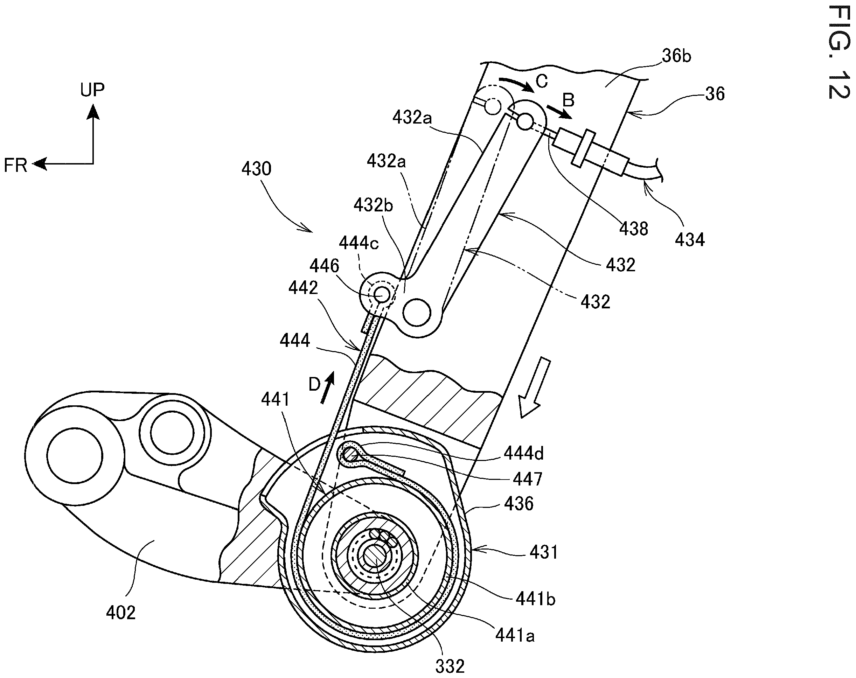

Fig. 12 shows the action of the suspension lock mechanism 430.

In a state shown in Fig. 10, the pivot arm 402 is in a vertically rockable state with the spindle 332 in the center as shown by an arrow A.

As shown in Fig. 12, when the suspension lock operating lever 201 (see Fig. 13) is operated and the inner wire 438 of the lock cable 434 is pulled as shown by an arrow B, the operating lever 432 is turned as shown by an arrow C. When the operating lever 432 is turned, the second lever 432b of the operating lever 432 pulls the band shoe 442 as shown by an arrow D. As a result, as the band shoe 442 tightens the drum 441 (detailedly, the outer cylinder 441b), the turning of the drum 441 is locked. That is, a rocking of the pivot arm 402 is locked.

As the suspension lock mechanism 430 is provided with the drum 441 and the band shoe 442, the rocking of the pivot arm 402 can be locked with a simple structure and continuously independent of an inclination of the pivot arm 402.

For example, when a downward load acts on the vehicle body, that is, a downward load acts on the support arm 36b as shown by a void arrow in Fig. 12 in a state in which the rocking of the pivot arm 402 is locked, the drum 441 tries to turn clockwise with the spindle 332 in the center together with the pivot arm 402. At this time, as the side of the other end 444d of the band shoe 442 is wound from the rear side of the drum 441, the side of the other end 444d is pulled downward by force produced when the drum 441 tries to turn. As the other end 444d is coupled to the fixing pin 447, the other end is not turned together with the drum 441 and conversely, as the band shoe 442 acts so that the band shoe tightens the drum 441, the turning of the pivot arm 402 is blocked.

In the meantime, for example, when a direction in which the band shoe 442 wound onto the drum 441 is wound is reverse to the direction in this embodiment, that is, when the side of the one end 444c of the band shoe 442 is wound from the rear side of the drum 441 and the side of the other end 444d of the band shoe 442 is wound from the front side of the drum 441, the side of the one end 444c of the band shoe 442 is pulled downward when the drum 441 tries to turn clockwise with the spindle 332 in the center together with the pivot arm 402 while a downward load acts in a direction shown by the void arrow. As the one end 444c is coupled to the second lever 432b of the operating lever 432, the band shoe 442 is pulled by force produced when the drum 441 tries to turn and the operating lever 432 may be turned in a direction reverse to the arrow C. When the operating lever 432 is turned, the band shoe 442 is loosened and a lock of the rocking of the pivot arm 402 is released.

As described above, in this embodiment, a lock of the suspension by the suspension lock mechanism 430 can be securely performed by suitably setting the wound direction of the band shoe 442.

Besides, structure in which the lock cable 434 is replaced with a push rod and the operating lever 432 is replaced with a toggle lever may be also adopted.

The toggle lever is a lever provided with a function that repeats operation for pulling the band shoe 442 and holding a pulled state and operation for loosening a pull by repeating rocking operation by the same input from the push rod, and a shape of the lever itself may be also the same as the shape of the operating lever 432.

The tightening of the drum 441 by the band shoe 442 coupled to a second lever of the toggle lever is performed by pushing a first lever of the toggle lever by the push rod and next, the tightening of the drum 441 by the band shoe 442 can be released by pushing the push rod.

As a hold switching mechanism for holding an oscillation angle of the toggle lever itself or releasing holding is provided to the toggle lever, a tightened state and a tightening released state of the band shoe 442 can be switched. Besides, as the tightening or the tightening release of the band shoe 442 is not performed unless the toggle lever is swung up to a predetermined position, a click stop feeling in operation is satisfactory, the faulty operation of the toggle lever by a jam and others can be readily sensed, and a lock and the release of a lock of the suspension can be securely performed.

Fig. 13 is a rear view showing the rocking lock operating lever 130, the suspension lock operating lever 201 and their circumferential parts.

The rocking lock operating lever 130 that configures the rocking lock mechanism 90 (refer to Fig. 5) is supported by a lever supporting part (not shown) provided to the lever stay 145 (refer to Fig. 2) extended from body frame 11 (refer to Fig. 2) inside the leg shield 112.

The rocking lock operating lever 130 is provided with the rocking lock operating lever exposed backward from a cover opening 112a provided to the leg shield 112 on the downside of the right of the handlebar 42.

The suspension lock operating lever 201 supported by the lever supporting part is arranged inside the rocking lock operating lever 130.

A key cylinder 210 for switching on/off of a main electric power source of the rocking vehicle 10 (refer to Fig. 1) is provided in a position outside the rocking lock operating lever 130 and the suspension lock operating lever 201 in the vehicle width direction.

The key cylinder 210 is arranged inside the leg shield 112 and is provided with a key insertion slot 212 into which a key 211 for operation is inserted. The key insertion slot 212 is exposed backward from an opening of the leg shield 112.

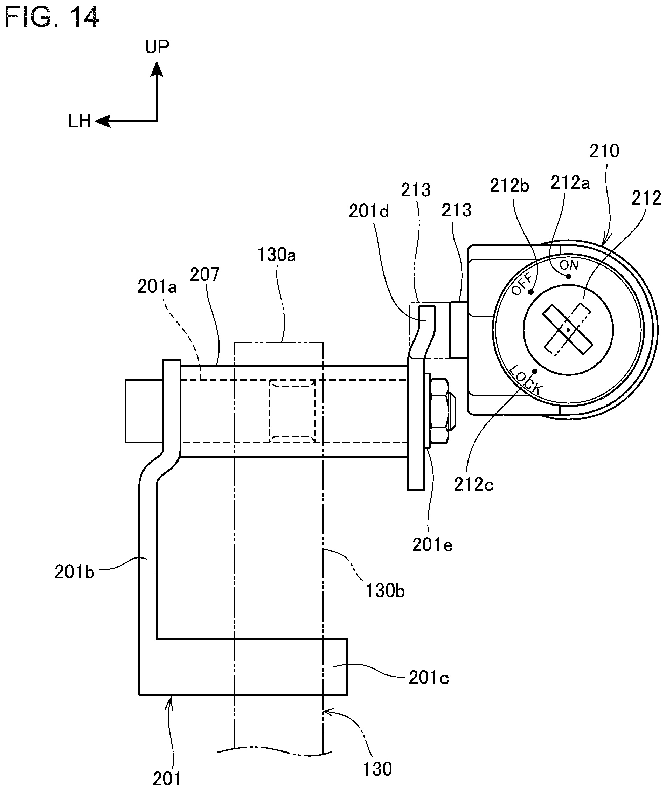

Fig. 14 shows the suspension lock operating lever 201 and its circumferential parts. In Fig. 14, the rocking lock operating lever 130 is shown by a virtual line.

The rocking lock operating lever 130 and the suspension lock operating lever 201 are supported by a lever supporting part 207.

The suspension lock operating lever 201 is provided with a spindle 201a turnably supported by the lever supporting part 207, a lever body 201b extended from the spindle 201a in a substantially perpendicular direction to it, a handle part 201c bent from an end of the lever body 201b substantially at a right angle with it and formed wider than the lever body 201b and a protrusion regulating part 201d arranged in the vicinity of the key cylinder 210. The spindle 201a and the handle part 201c are extended long in the vehicle width direction.

The spindle 201a is inserted inside the lever supporting part 207 from an end on the reverse side to the key cylinder 210 of the lever supporting part 207 and an end 201e of the spindle 201a is protruded on the side of the key cylinder 210 from an end on the side of the key cylinder 210 of the lever supporting part 207.

The protrusion regulating part 201d is a plate protruded outside in a radial direction of the spindle 201a and is fixed integrally with the end 201e of the spindle 201a. Therefore, when the suspension lock operating lever 201 is operated, the protrusion regulating part 201d is turned integrally with the suspension lock operating lever 201.

The key cylinder 210 is provided with an ON position 212a in which the main electric power source is turned on, an OFF position 212b in which the main electric power source is turned off and a lock position 212c in which a steered position of the handlebar 42 is locked as a turned position. When the turned position is the lock position 212c, the key 211 (refer to Fig. 13) is locked by a key locking mechanism (not shown) built in the key cylinder 210 and the extraction from the key cylinder 210 is disenabled.

The key cylinder 210 is provided with a protruded member 213 that can be advanced and retracted outside/inside in interlock with a turned position of the key cylinder 210 by the key 211. The protruded member 213 is formed in the shape of a bar and is extended on the side of the suspension lock operating lever 201 in the vehicle width direction from the side of the key cylinder 210.

Detailedly, the protruded member 213 is housed inside the key cylinder 210 in a state in which the turned position is the ON position 212a or the OFF position 212b. The protruded member 213 is protruded outside as shown by a virtual line in a state in which the turned position is the lock position 212c.

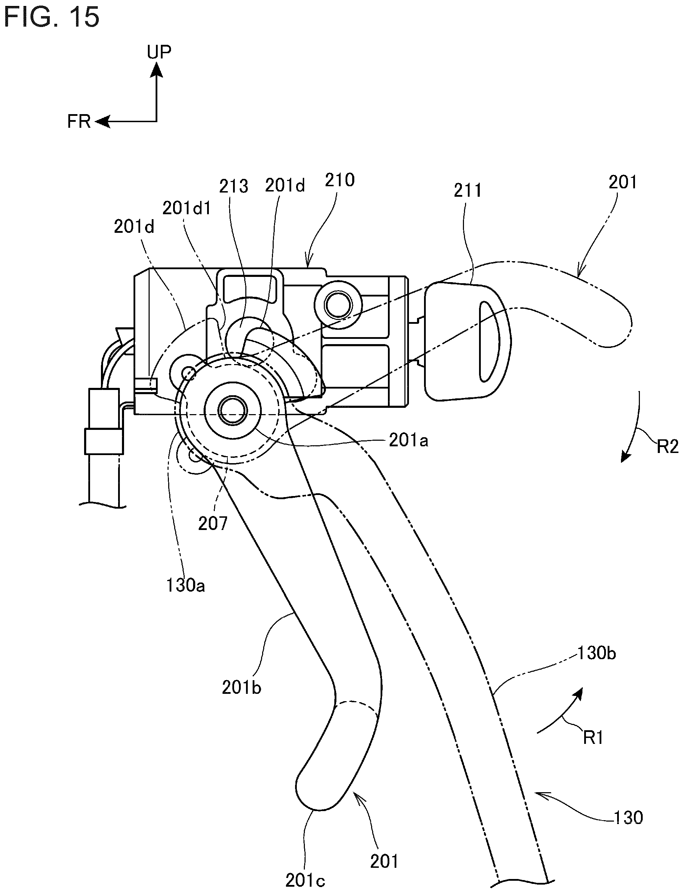

Fig. 15 is a side view showing the suspension lock operating lever 201 and the key cylinder 210. In Fig. 15, the rocking lock operating lever 130 is shown by a virtual line.

In a side view, the protrusion regulating part 201d is arranged so that it is overlapped with the protruded member 213 of the key cylinder 210 from the inside in the vehicle width direction.

Besides, as shown in Fig. 14, in a state in which the protruded member 213 is protruded as shown by the virtual line when the key insertion slot 212 is viewed from the front side, the protruded member 213 and the protrusion regulating part 201d are overlapped. That is, the protruded member 213 is arranged on a turning locus of the protrusion regulating part 201d.

As shown in Fig. 15, the rocking lock operating lever 130 is provided with a coupling part 130a turnably journaled to the lever supporting part 207, a lever extended part 130b extended from the coupling part 130a and a grasping part 130c (refer to Fig. 13) formed wide at an end of the lever extended part 130b. The lever extended part 130b is formed longer than the lever body 201b of the suspension lock operating lever 201.

The rocking lock operating lever 130 is journaled to the lever supporting part 207 by fitting the coupling part 130a to the periphery of the lever supporting part 207. That is, the rocking lock operating lever 130 is turnably supported coaxially with the suspension lock operating lever 201 by the lever supporting part 207, and turned directions of the rocking lock operating lever 130 and the suspension lock operating lever 201 are the same.

As shown in Fig. 14, the lever extended part 130b of the rocking lock operating lever 130 is arranged between the lever body 201b of the suspension lock operating lever 201 and the protrusion regulating part 201d in the vehicle width direction and is extended substantially in parallel with the lever body 201b.

Detailedly, when the lever extended part 130b of the rocking lock operating lever 130 is viewed from a direction perpendicular to an axial direction of the lever supporting part 207, a part of the lever extended part is overlapped with the handle part 201c of the suspension lock operating lever 201. That is, the lever extended part 130b is located on a turning locus of the handle part 201c.

In positions respectively shown in Figs. 13 and 14 of the rocking lock operating lever 130 and the suspension lock operating lever 201, the rocking lock mechanism 90 (refer to Fig. 5) and the suspension lock mechanism 430 (refer to Fig. 11) are in a state in which a lock is released.

When the rocking lock operating lever 130 is operated and turned in an actuating direction R1 from this state as shown in Fig. 15, the rocking lock mechanism 90 is actuated. Besides, when the suspension lock operating lever 201 is operated and turned in the actuating direction R1 and is turned to a suspension lock position shown by a virtual line, the suspension lock mechanism 430 is actuated.

That is, the actuating directions R1 of the rocking lock operating lever 130 and the suspension lock operating lever 201 are the same. Besides, releasing directions R2 for releasing the rocking lock operating lever 130 and the suspension lock operating lever 201 from the rocking lock position and the suspension lock position are directions reverse to the actuating directions R1.

As shown in Fig. 15, in locking positions of the rocking lock operating lever 130 and the suspension lock operating lever 201, the rocking lock operating lever 130 is located in a turned position in which the rocking lock operating lever advances a little in the actuating direction R1 from the suspension lock operating lever 201 and the lever extended part 130b is located on the turning locus of the handle part 201c.

That is, the rocking lock operating lever 130 is arranged in a position in which the rocking lock operating lever prevents the operation in the actuating direction R1 of the suspension lock operating lever 201. Therefore, the suspension lock operating lever 201 cannot be operated in the actuating direction R1 so as to locate the lever in the suspension lock position without first operating the rocking lock operating lever 130 in the actuating direction R1.

Next, one example of a procedure for parking the rocking vehicle 10 will be described.

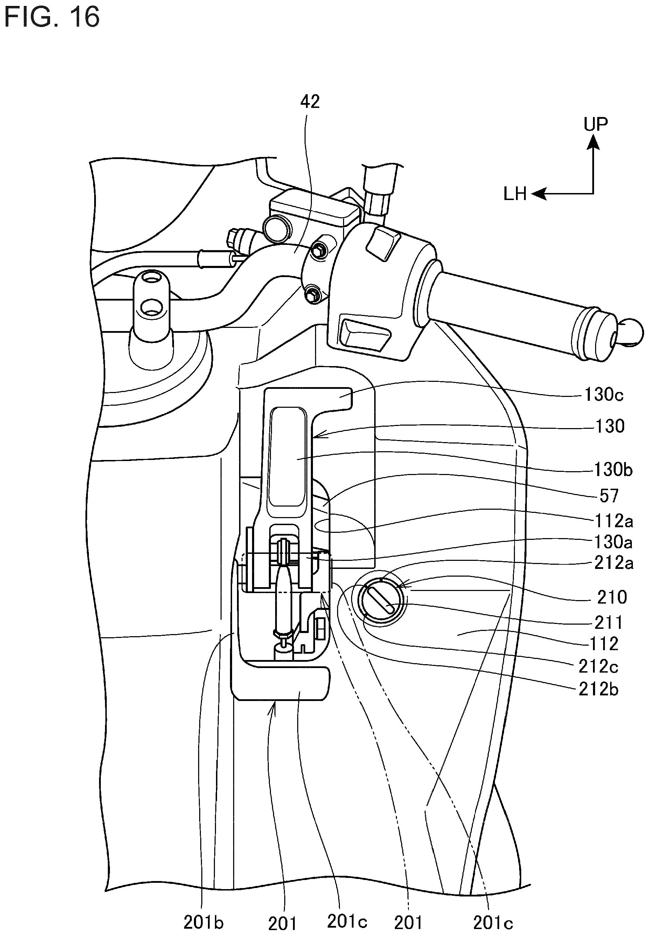

Fig. 16 shows a state in which the rocking lock operating lever 130 is located in the rocking lock position.

First, the rocking vehicle 10 (refer to Fig. 1) is turned a parked state and the key 211 is set to the OFF position 212b. In this state, the rocking lock operating lever 130 and the suspension lock operating lever 201 are located in a lock release position and as shown in Fig. 15, the protrusion regulating part 201d is overlapped with the protruded member 213 in a protruded direction. Hereby, as the protrusion of the protruded member 213 is prevented by the protrusion regulating part 201d when setting the key 211 in the lock position 212c is tried, the key 211 cannot be set to the lock position 212c. Accordingly, the key 211 cannot be extracted.

Next, the brake lever 123b (refer to Fig. 3) and the rocking lock operating lever 130 are operated in the order and are turned "a rocking locked state" through "a parking braked state". At this time, as shown in Figs. 15 and 16, as the rocking lock operating lever 130 is turned in the actuating direction R1 and is set to the rocking lock position, the operation in the actuating direction R1 of the suspension lock operating lever 201 is enabled. In this state, the key 211 is located in the OFF position 212b, the protruded member 213 is not protruded, and the protruded member does not prevent the turning in the actuating direction R1 of the suspension lock operating lever 201.

Next, as the suspension lock operating lever 201 is operated in the actuating direction R1 and is located in the suspension lock position as shown by the virtual line in Fig. 15, a stroke of the link type suspension mechanism 401 (refer to Fig. 9) is stopped. In this state, as shown by a virtual line in Fig. 15, the protrusion regulating part 201d is turned in the actuating direction R1 and is moved to a position in which the protrusion regulating part is not overlapped with the protruded member 213. Therefore, the key 211 can be set to the lock position 212c and can be also extracted.

That is, in this embodiment, except "the rocking locked state" and a state in which a stroke of the link type suspension mechanism 401 is stopped, the key 211 cannot be extracted. Therefore, in parking, a user can be inspired to turn "the rocking locked state" and the state in which a stroke of the link type suspension mechanism 401 is stopped and the rocking vehicle 10 (refer to Fig. 1) can be suitably parked.

Besides, as in a parked state as described above, the protrusion regulating part 201d is in a protruded state, an end 201d1 (refer to Fig. 15) of the protrusion regulating part 201d is abutted on a side of the protruded member 213 when the turning in the releasing direction R2 of the suspension lock operating lever 201 is tried. Therefore, in parking, a person except an owner of the key 211 can be prevented from operating the suspension lock operating lever 201 in the releasing direction R2.

Moreover, in this state, as the handle part 201c of the suspension lock operating lever 201 prevents from operating the rocking lock operating lever 130 in the releasing direction R2, the rocking lock operating lever 130 cannot be also released. Therefore, in parking, the rocking lock operating lever 130 and the suspension lock operating lever 201 can be prevented from being released, the rocking vehicle can be suitably parked, and the theft of the rocking vehicle 10 can be inhibited.

When the parked state is released, the key cylinder 210 is turned to the ON position 212a or the OFF position 212b by the key 211, the protrusion of the protrusion regulating part 201d is released, afterward, the suspension lock operating lever 201 and the rocking lock operating lever 130 are turned in the releasing direction R2, and the locked state has only to be released. In this embodiment, as the rocking lock operating lever 130 cannot be also released without releasing the suspension lock operating lever 201, a state in which a stroke of the link type suspension mechanism 401 is stopped can be prevented from being maintained though "the rocking locked state" is released.

As shown in Figs. 9 to 11, in the suspension lock mechanism 430 of the rocking vehicle 10 where the pivot arm 402 as an arm is rockably supported by the support arm 36b as a vehicle body-side member provided on the vehicle body side via the spindle 332, the front wheel 2 as a wheel is supported by the end of the pivot arm 402 via the axle 40 and a stroke of the link type suspension mechanism 401 as a suspension in which the shock absorber 37b is extended/contracted by the rocking of the pivot arm 402 is stopped, the cylindrical drum 441 is provided to the pivot arm 402 with the drum encircling the spindle 332 and as the band shoe 442 as a friction member that stops the turning of the drum 441 by frictional force is provided to the support arm 36b, the rocking of the pivot arm 402 can be locked.

According to this configuration, a stroke of the link type suspension mechanism 401 can be stopped by stopping the turning of the drum 441 by frictional force of the band shoe 442 and locking the rocking of the pivot arm 402.

For example, in the rocking vehicle 10 (see Fig. 1) provided with the two front wheels 2L, 2R (see Fig. 4), to sustain the rocking vehicle 10 by itself, a roll of the vehicle body can be regulated by locking the suspension by the suspension lock mechanism 430 at the same time as locking the rocking and the vehicle can be stabilized in parking or stopping, in riding in a stopped state, in pushing while walking and others.

Besides, as shown in Fig. 10, as the friction member is the band shoe 442, a cost of the suspension lock mechanism 430 can be reduced with a simple structure that the band shoe 442 is wound onto the drum 441.

Moreover, as the operating lever 432 is actuated by operating the cable and the drum 441 is tightened by the band shoe 442 coupled to the operating lever 432, a cost of the suspension lock mechanism 430 can be reduced with a simple structure that the operating lever 432 is actuated by operating the cable and the band shoe 442 is pulled by the operating lever 432.

In addition, as shown in Figs. 4 and 10, as the operating lever 432 is provided to the support arm 36b that configures the steering mechanism that steers by operating the handlebar and is provided so that the longitudinal direction of the operating lever 432 is along the support arm 36b, the operating lever 432 is made inconspicuous in appearance, the protrusion of the operating lever 432 from the support arm 36b is inhibited, and the suspension lock mechanism 430 can be compacted.

Further, as shown in Fig. 11, as the drum 441 is arranged between the lower end plates 36e, 36f as the pair of side walls provided to the lower end of the support arm 36b with the lower end plates apart in the vehicle width direction, the protrusion in the vehicle width direction of the suspension lock mechanism 430 is inhibited and the suspension lock mechanism 430 can be compacted. Furthermore, as the suspension lock mechanism 430 is made possibly invisible from the lateral side of the vehicle body, the appearance quality can be enhanced.

Furthermore, as the band shoe 442 is extended along the support arm 36b from the operating lever 432 to the drum 441, the suspension lock mechanism 430 can be compactly arranged.

The above-mentioned embodiment clarifies one mode of the present invention and the present invention can be arbitrarily varied and applied in a scope that does not deviate from the purpose of the present invention.

For example, in the above-mentioned embodiment, as shown in Fig. 9, the suspension lock mechanism 430 is provided to the bottom link type suspension (the link type suspension mechanism 401), however, the present invention is not limited to this and the suspension lock mechanism 430 may be also provided to another type suspension using an arm.

Besides, the present invention is not limited to the structure for fixing the drum 441 to the pivot arm 402 shown in Fig. 11. For example, the spindle 332 is integrated with the pivot arm 402 and the inner cylinder 441a of the drum 441 may be also fixed to the spindle 332. In this case, a bearing is provided between the lower end plates 36e, 36f of the support arm 36b and the spindle 332, and the spindle 332 is turnably supported by the lower end plates 36e, 36f via the bearing. Moreover, the drum 441 fixed to the spindle 332 may be also provided not between the pair of lower end plates 36e, 36f but to one outside lateral side of the lower end plates 36e, 36f.

Furthermore, in the above-mentioned embodiment, as shown in Fig. 1, the power unit 100 provided with the engine 101 is described for an example, however, the present invention is not limited, and for example, the present invention may be also applied to a power unit using an electric motor driven by a battery.

Further, in the above-mentioned embodiment, as shown in Figs. 1 and 4, the three-wheeled rocking vehicle provided with the front wheels 2L, 2R and one rear wheel 3 is described for an example, however, the present invention is not limited to this, and for example, the present invention may be also applied to a four-wheel rocking vehicle provided with two rear wheels.

### Reference Signs List:

2... Front wheel (Wheel)
10... Swing type vehicle (Vehicle)
36b... Support arm (Vehicle body-side member)
36e, 36f... Lower end plate (Side wall)
37b... Shock absorber
40... Axle
332... Spindle
401... Link type suspension mechanism (Suspension)
402... Pivot Arm (Arm)
430... Suspension lock mechanism
432... Operating lever
441... Drum
442... Band shoe (Friction member)

## Claims

1. A suspension lock mechanism of a vehicle where an arm (402) is rockably supported by a vehicle body-side member (36b) provided on the vehicle body side via a spindle (332), a wheel (2) is supported by an end of the arm (402) via an axle (40) and a stroke of a suspension (401) in which a shock absorber (37b) is extended/contracted by a rocking of the arm (402) is stopped,
wherein: a cylindrical drum (441) is provided to the arm (402) with the drum (441) encircling the spindle (332); and
a rocking of the arm (402) can be locked by providing a friction member (442) that stops the turning of the drum (441) by frictional force to the vehicle body-side member (36b).

2. The suspension lock mechanism of the vehicle according to Claim 1, wherein the friction member is a band shoe (442).

3. The suspension lock mechanism of the vehicle according to Claim 2,
wherein: an operating lever (432) is actuated by operating a cable; and
the drum (441) is tightened by the band shoe (442) coupled to the operating lever (432).

4. The suspension lock mechanism of the vehicle according to Claim 3,
wherein: the operating lever (432) is provided to the vehicle body-side member (36b) that configures a steering mechanism that steers by operating a handlebar; and
the operating lever (432) is provided with a longitudinal direction of the operating lever (432) along the vehicle body-side member (36b).

5. The suspension lock mechanism of the vehicle according to any of Claims 1 to 4, wherein the drum (441) is arranged between a pair of side walls (36e, 36f) provided to a lower end of the vehicle body-side member (36b) with the pair of side walls (36e, 36f) apart in a vehicle width direction.

6. The suspension lock mechanism of the vehicle according to any of Claims 1 to 5, wherein the friction member (442) is extended along the vehicle body-side member (36b) from the operating lever (432) to the drum (441).

## Patentansprüche

1. Aufhängungssperrmechanismus für ein Fahrzeug, wobei ein Arm (402) schwingbar von einem Element (36b) an einer Fahrzeugkarosserieseite gehalten wird, das an einer Fahrzeugkarosserieseite über eine Spindel (332) vorgesehen ist, ein Rad (2) von einem Ende des Arms (402) über eine Achse (40) gehalten wird und ein Hub einer Aufhängung (401) gestoppt wird, in der ein Stoßdämpfer (37b) durch ein Schwingen des Arms (402) erweitert/zusammengepresst wird,
wobei: eine zylindrische Trommel (441) am Arm (402) vorgesehen ist, wobei die Trommel (441) die Spindel (332) umgibt; und
ein Schwingen des Arms (402) gesperrt werden kann, indem ein Reibungselement (442) vorgesehen wird, das das Drehen der Trommel (441) durch Reibungskraft am Element (36b) an der Fahrzeugkarosserieseite stoppt.

2. Aufhängungssperrmechanismus des Fahrzeugs nach Anspruch 1, wobei das Reibungselement ein Bandschuh (442) ist.

3. Aufhängungssperrmechanismus des Fahrzeugs nach Anspruch 2, wobei: ein Betätigungshebel (432) durch Betätigung eines Kabels ausgelöst wird; und
die Trommel (441) durch den Bandschuh (442) festgestellt wird, der mit dem Betätigungshebel (432) gekoppelt ist.

4. Aufhängungssperrmechanismus des Fahrzeugs nach Anspruch 3, wobei: der Betätigungshebel (432) an dem Element (36b) an der Fahrzeugkarosserieseite vorgesehen ist, das einen Lenkmechanismus ausgestaltet, der durch Betätigen eines Lenkers lenkt; und
der Betätigungshebel (432) in einer Längsrichtung des Betätigungshebels (432) entlang des Elements (36b) an der Fahrzeugkarosserieseite vorgesehen ist.

5. Aufhängungssperrmechanismus des Fahrzeugs nach einem der Ansprüche 1 bis 4, wobei die Trommel (441) zwischen einem Paar von Seitenwänden (36e, 36f) angeordnet ist, die an einem unteren Ende des Elements (36b) an der Fahrzeugkarosserieseite mit dem Paar von Seitenwänden (36e, 36f) in der Fahrzeugbreitenrichtung beabstandet vorgesehen ist.

6. Aufhängungssperrmechanismus des Fahrzeugs nach einem der Ansprüche 1 bis 5, wobei das Reibungselement (442) entlang dem Element (36b) an der Fahrzeugkarosserieseite vom Betätigungshebel (432) zur Trommel (441) verlängert ist.

## Revendications

1. Mécanisme de verrouillage de suspension d'un véhicule où un bras (402) est supporté en basculement par un organe côté carrosserie de véhicule (36b) prévu sur le côté carrosserie de véhicule via une fusée (332), une roue (2) est supportée par une extrémité du bras (402) via un essieu (40) et une course d'une suspension (401) dans laquelle un absorbeur de choc (37b) est étendu/contracté par un basculement du bras (402) est arrêtée,
dans lequel : un tambour cylindrique (441) est prévu sur le bras (402) avec le tambour (441) encerclant la fusée (332) ; et
un basculement du bras (402) peut être verrouillé en fournissant un organe de frottement (442) qui arrête la rotation du tambour (441) par une force de frottement sur l'organe côté carrosserie de véhicule (36b).

2. Mécanisme de verrouillage de suspension du véhicule selon la revendication 1, dans lequel l'organe de frottement est un patin à bande (442).

3. Mécanisme de verrouillage de suspension du véhicule selon la revendication 2,
dans lequel : un levier de manoeuvre (432) est actionné en manoeuvrant un câble ; et
le tambour (441) est serré par le patin à bande (442) couplé au levier de manoeuvre (432).

4. Mécanisme de verrouillage de suspension du véhicule selon la revendication 3,
dans lequel : le levier de manoeuvre (432) est prévu sur l'organe côté carrosserie de véhicule (36b) qui configure un mécanisme de direction qui dirige en manoeuvrant un guidon ; et
le levier de manoeuvre (432) est prévu avec une direction longitudinale du levier de manoeuvre (432) le long de l'organe côté carrosserie de véhicule (36b).

5. Mécanisme de verrouillage de suspension du véhicule selon l'une quelconque des revendications 1 à 4, dans lequel le tambour (441) est agencé entre une paire de parois de côté (36e, 36f) prévue sur une extrémité inférieure de l'organe côté carrosserie de véhicule (36b), la paire de parois de côté (36e, 36f) étant espacée dans un sens de la largeur du véhicule.

6. Mécanisme de verrouillage de suspension du véhicule selon l'une quelconque des revendications 1 à 5, dans lequel l'organe de frottement (442) est étendu le long de l'organe côté carrosserie de véhicule (36b) depuis le levier de manoeuvre (432) jusqu'au tambour (441).
